**Europäisches Patentamt**

**European Patent Office**

**Office européen des brevets**

(19)

(11) Veröffentlichungsnummer: **0 288 593 B1**

## EUROPÄISCHE PATENTSCHRIFT

(12)

(45) Veröffentlichungstag der Patentschrift: **22.01.92**

(51) Int. Cl.⁵: **A01C 3/02**

(21) Anmeldenummer: **87106278.2**

(22) Anmeldetag: **30.04.87**

(54) **Güllemixer zum Anbau an einen Ackerschlepper und zum Antrieb mittels Zapfwelle.**

(43) Veröffentlichungstag der Anmeldung:
**02.11.88 Patentblatt 88/44**

(45) Bekanntmachung des Hinweises auf die
Patenterteilung:
**22.01.92 Patentblatt 92/04**

(84) Benannte Vertragsstaaten:
**DE NL**

(56) Entgegenhaltungen:
**EP-A- 0 055 596**
**GB-A- 2 110 101**

(73) Patentinhaber: **Reck, Anton**
**Reckstrasse 1**
**W-7952 Betzenweiler(DE)**

(72) Erfinder: **Reck, Anton**
**Reckstrasse 1**
**W-7952 Betzenweiler(DE)**

(74) Vertreter: **Patentanwälte Dipl.-Ing. E. Eisele**
**Dr.-Ing. H. Otten**
**Seestrasse 42**
**W-7980 Ravensburg(DE)**

## Beschreibung

Die Erfindung betrifft einen Güllemixer zum Anbau an einen Ackerschlepper und zum Antrieb mittels Zapfwelle, bestehend aus einem Dreieckanschlußbock, der mit den Dreieckslenkern des Schleppers verbindbar ist, einem Auslegerarm, der um eine an der Basis des Dreieckanschlußbocks horizontal verlaufende Achse schwenkbar gelagert ist, einem am oberen Ende des Auslegerarms in einem Schwenklager mit horizontaler Achse gelagerten Propellerarm, der im Betriebszustand nach unten geneigt ist und am unteren Ende einen Propeller trägt, wobei zur Übertragung der Antriebsbewegung auf den Propeller ein mit der Zapfwelle kuppelbarer Gelenkwellenstrang vorgesehen ist, und zwei stufenlos längenveränderbaren Zugvorrichtungen, von denen die eine zur Neigungsverstellung des Auslegerarms am oberen Ende des Dreieckanschlußbocks und die andere zur Neigungsverstellung des Propellerarms an einem nach oben über das Schwenklager hinausstehenden Fortsatz des Propellerarms angelenkt ist.

Ein Güllemixer dieser Art ist aus der EP-A 0 055 596 bekannt. Er ist für tiefliegende Gruben bestimmt. Am unteren Ende des Propellerarms sitzt auf einem senkrecht zu diesem gelagerten Wellenstummel ein Propeller, der über eine Kette angetrieben wird. Das Kettenrad am oberen Ende des Propellerarms wird von der Zapfwelle mittels eines Gelenkwellenstrangs angetrieben. Dabei kann die Neigung des Auslegerarms zum Schlepper und des Propellerarms zum Auslegerarm den besonderen Verhältnissen angepaßt werden mit Hilfe von Schraublaschen, die wahlweise mit einem von mehreren in einer Reihe angeordneten Befestigungspunkten verbunden werden können.

Ferner wird ein als Pumpe ausgebildeter Güllemixer für tiefe Gruben in der GB-A 2 110 101 beschrieben. Bei diesem bildet der Propellerarm in der Betriebsstellung mit dem Auslegerarm ebenfalls einen etwa rechten Winkel. Hier ist am oberen Ende der Propellerwelle ein Winkelgetriebe vorgesehen, welches mittels eines im wesentlichen geradlinigen horizontalen Gelenkwellenstrangs von der Zapfwelle angetrieben wird.

Andere Güllemixer sind unter der Bezeichnung Turmmixer bekannt geworden. Sie dienen zum Rühren in ebenerdig aufgestellten, jedenfalls die Stellfläche des Schleppers weit überragenden Flüssigdungbehältern. Diese Mixer haben einen am Schlepper angebauten lotrecht stehenden Turm, der eine Antriebswelle enthält, die oben und unten in je einem rechtwinkligen Winkelgetriebe endet. Die Zapfwelle des Schleppers ist über eine Gelenkwelle mit der Antriebswelle des unteren Winkelgetriebes gekuppelt, während die nach der entgegengesetzten Seite abstehende Abtriebswelle des oberen Winkelgetriebes über eine weitere Gelenkwelle mit der Propellerwelle gekuppelt ist. Die Behälterwand kann beispielsweise vier oder fünf Meter hoch sein. Der Turm hat oben ein Podest, auf das die Bedienungsperson hinaufsteigt, um über den Behälterrand zu sehen und mittels einer auf dem Podest bedienbaren Stellvorrichtung die Neigung der Propellerwelle einzustellen.

Neben tiefliegenden betonierten Gruben und Hochbehältern gibt es noch eine dritte Art von Dunggruben, die sog. Lagunen, die insbesondere in Küstennähe verbreitet sind. Es handelt sich dabei um etwa 1,5 m tief aus dem sandigen Erdreich ausgehobene Gruben, die mit einer Kunststofffolie ausgekleidet sind und meist eine langgestreckte Umrißform haben. Das Aushubmaterial wird am Rand der Lagune in Form eines Dammes abgelegt, der einen Schüttwinkel von etwa 50° und eine 1 m breite Dammkrone hat. Der Damm ist, gegenüber der umgebenden Bodenoberfläche gemessen, etwa 2,5 m hoch. Bei einer solchen Lagune lassen sich die bekannten zapfwellengetriebenen Rührgeräte nicht einsetzen, da sie den Lagunendamm nicht zu überwinden vermögen. Andererseits ist aber auch ein Turmmixer nicht verwendbar, weil man den Turm in Anbetracht der Breite des Dammes nicht nahe genug an die Grube heranbringen kann.

Der Erfindung liegt die Aufgabe zugrunde, einen Güllemixer zu schaffen, der für Hochbehälter mittlerer Wandhöhen von etwa 3 m, für Lagunen und für tiefliegende Gruben verwendbar und in leichter Bauweise ausgeführt ist.

Diese Aufgabe wird ausgehend von einem Güllemixer der einleitend bezeichneten Art erfindungsgemäß dadurch gelöst, daß der Propellerarm aus einem Propellerrohr besteht, das eine Propellerwelle enthält, die mit der Abtriebswelle eines Winkelgetriebes fluchtet und an ihrem unteren Ende einen Propeller trägt, und daß der Gelenkwellenstrang ein an der Unterseite des Auslegerarms angebautes Doppelgelenk umfaßt, dessen Antriebswelle und Abtriebswelle durch zwei spiegelbildlich angeordnete Kardangelenke mit einem Gelenkmittelstück verbunden und an dem Auslegerarm drehbar gelagert sind, wobei die von dem Gelenkmittelstück abgewendeten Enden beider Wellen zur Ebene der Holme hin geneigt sind, und daß die Antriebswelle mit der Zapfwelle und die Abtriebswelle mit der Antriebswelle des Winkelgetriebes über teleskopierbare Gelenkwellen verbunden sind.

Die vergrößerte Schwenkbarkeit des Auslegerarms und die davon unabhängige Schwenkbarkeit des Propellerrohres ermöglicht einen Betrieb des Rührpropellers sowohl unter als auch über der Standfläche des Schleppers. Beim Einsetzen in freistehende oder nur teilweise in den Erdboden eingelassene Behälter und in Lagunen kann der Propeller zur Überwindung der Behälterwand bzw.

des Lagunendammes auf mindestens 2,5 m angehoben werden. Die von dem Auslegerarm und der Propellerwelle im Betriebszustand gebildete A-Form eignet sich hervorragend zum Überbrücken des Lagunendammes. Der Auslegerarm kann in einer in einzelne Streben und Spannstränge aufgelösten Bauweise konstruiert sein, die leicht ist, eine große Spannweite ermöglicht und Bewegungsfreiheit für die Gelenkwellen gibt.

Das Doppelgelenk, das einen verhältnismäßig großen Winkel von z. B. 30° zwischen Antriebs- und Abtriebswelle aufweist, hat zur Folge, daß der Wellenstrang in einem sanften, nach unten ausschwingenden Bogen geführt wird und verhältnismäßig steil ansteigend das vorzugsweise rechtwinklige Winkelgetriebe erreicht. Die Schwenkbewegung des Auslegerarms wird durch die untere teleskopierbare Gelenkwelle und die Schwenkbewegung des Propellerarms durch die obere teleskopierbare Gelenkwelle ausgeglichen.

Bekanntlich ist bei einer Gelenkwelle aus zwei Anschlußwellen und einem Mittelstück, das mit den Anschlußwellen über spiegelsymmetrisch angeordnete Kardangelenke verbunden ist, bei gleichförmiger Antriebsgeschwindigkeit die Abtriebsgeschwindigkeit nur dann ebenfalls gleichförmig, wenn die drei Achsen in einer Ebene liegen und die Winkel welche die Anschlußwellen mit dem Mittelstück bilden, gleiche Beträge haben. Je nach dem, ob die Vorzeichen dieser Winkel gleich oder ungleich sind, nennt man dies eine Z- bzw. eine W-Anordnung. In diesen Anordnungen bzw. bei geringen Abweichungen davon ist eine Gelenkwelle bekanntlich voll belastbar. Zur Erreichung eines besonders großen Schwenkbereichs des Propellerarms bei voller Belastbarkeit des Gelenkwellenstrangs ist es daher zweckmäßig, den Schwenkradius des Gelenks am Winkelgetriebe und die Länge der anschließenden Teleskopwelle sorgfältig aufeinander abzustimmen. Dabei nimmt die Gelenkwelle in der mittleren Winkelstellung des Propellerarms eine Stellung ein, die zwischen einer Z-Anordnung und einer W-Anordnung liegt und sich beim Absenken in eine Z-Anordnung und beim Hochschwenken der Propellerwelle in eine W-Anordnung verändert.

Als Zugvorrichtung zur Neigungsverstellung des Auslegerarms wird zweckmäßigerweise eine Zugspindel und als Zugvorrichtung für den Propellerarm ein hydraulischer Stellkolben herangezogen. Vorzugsweise hat der Auslegerarm etwa auf halber Länge einen quer zu seiner Längserstreckung nach oben abstehenden biegesteifen Konsolarm, an dessen freiem Ende beide Zugvorrichtungen entgegengesetzt angreifen.

Ein Ausführungsbeispiel der Erfindung wird nachfolgend anhand der Zeichnungen erläutert. Im einzelnen zeigt

Fig. I     die Seitenansicht eines an einem Schlepper angebauten Güllemixers, angewendet bei einem im Vertikalschnitt dargestellten Rundbehälter,

Fig. 2     eine entsprechende Seitenansicht des Güllemixers im Einsatz an einer im Vertikalschnitt dargestellten Lagune und

Fig. 3     eine schematische Darstellung der wesentlichen Teile des Güllemixers nach den Figuren I und 2 in Seitenansicht und in größerem Maßstab.

Der Güllemixer nach Fig. I besteht aus einem an einem Ackerschlepper auf und ab schwenkbar gelagerten Auslegerarm (I) und aus einem Propellerrohr (2), in welchem eine Propellerwelle gelagert ist, die an ihrem unteren Ende einen Rührpropeller (3) trägt. Sowohl die Neigung des Auslegerarms (I) bezüglich des Schleppers als auch die Neigung des Propellerrohres (2) bezüglich des Auslegerarms (I) ist veränderbar. In der gezeigten Betriebsstellung bilden die beiden Hauptteile eine A-Konfiguration, welche die Wand (4) eines runden, etwa zur Hälfte in den Erdboden eingesenkten Flüssigdungbehälters überbrückt. Bezogen auf die Stellfläche des Schleppers beträgt die Höhe der Wand (4) etwa 2,5 m.

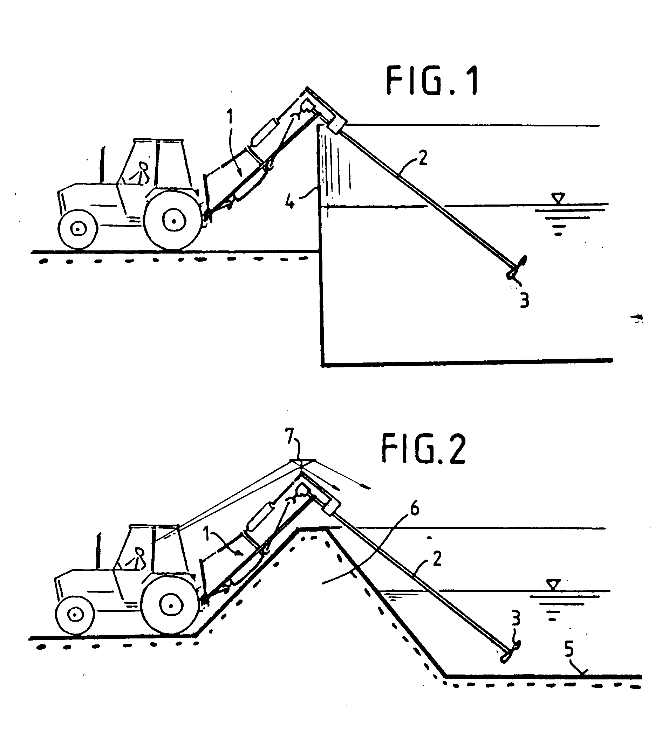

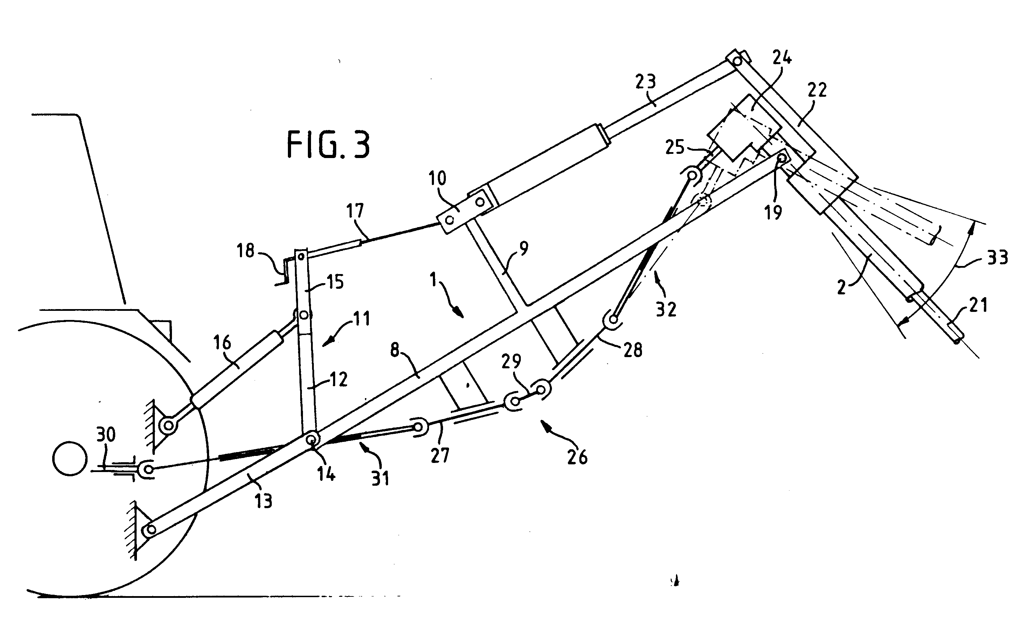

Nach Fig. 2 taucht das Propellerrohr (2) mit dem Rührpropeller (3) in eine Lagune ein, deren Boden (5) etwa I,5 m unter der Bodenoberfläche bzw. Stellfläche des Schleppers liegt. Die Lagune ist umgeben von einem Damm (6), der am Fuß eine Breite von etwa 6 m und an der Krone eine Breite von etwa I m hat. Der Böschungswinkel des Dammes beträgt etwa 50°. Die Dammkrone ist, bezogen auf die Standfläche des Schleppers, etwa 2,5 m hoch.

Es wird deutlich, daß mit dem dargestellten und nachfolgend näher zu beschreibenden Güllemixer ohne besondere Vorkehrungen an die Lagune bzw. den Rundbehälter herangefahren und mit dem Rühren begonnen werden kann. Durch Hochschwenken des Auslegerarms (I) und des Propellerrohres (2) kann der Propeller über die Behälterwand (4) bzw. den Damm (6) hinweg gehoben werden. Mit Hilfe eines am oberen Teil des Auslegerarms (I) oder des Propellerrohres (2) angebrachten Spiegels (7) kann dem Schlepperfahrer Einblick in den Behälter bzw. die Lagune verschafft werden.

Nach Fig. 3 besteht der Auslegerarm (I) aus zwei nebeneinanderliegenden (d. h. senkrecht zur Zeichenebene hintereinanderliegenden) Holmen (8), die in ihrem mittleren Längenbereich miteinander und mit einem rechtwinklig nach oben abstehenden Konsolarm (9) fest verbunden sind. Der Konsolarm hat oben einen Kopf (I0) mit zwei entgegengesetzt abstehenden Gabelösen zur Anlenkung von Zugelementen. Zum Auslegerarm gehört ein Dreieckanschlußbock (II), der die Form eines auf dem Kopf stehenden Y hat. An den beiden nach unten abstehenden Schenkeln (l2) sind sowohl die Holme (8) als auch die Unterlenker (l3) der Anschlußvorrichtung eines landwirtschaftlichen Schleppers angelenkt. Die horizontalen Drehzapfen (l4) an der Basis des Dreieckanschlußbocks (ll) bilden das Schwenklager des Auslegerarms (l). An dem nach oben stehenden Stiel (l5) des Dreieckanschlußbocks (ll) ist der Oberlenker (l6) des Schleppers angelenkt. Eine Zugspindel (l7), deren Handkurbel mit (l8) bezeichnet ist, verbindet das obere Ende des Stiels (l5) mit dem Kopf (l0), so daß die Neigung des Auslegerarms (l) durch Betätigung der Zugspindel (l7) und/oder durch Auf-und Abschwenken der Dreieckslenker (l3, l6) verändert werden kann.

Die oberen Enden der Holme (8) nehmen das Schwenklager (l9) eines Propellerrohres (2) zwischen sich auf. Es ist wie auch die darin gelagerte Propellerwelle (2l) abgebrochen dargestellt. An dem Propellerrohr (2) ist ein nach oben über das Schwenklager (l9) hinausstehender Fortsatz (22) befestigt, dessen freies Ende mittels eines hydraulischen Stellkolbens (23) mit dem Kopf (l0) gelenkig verbunden ist. Durch Betätigung dieses Stellkolbens läßt sich die Neigung des Propellerrohres (2) bezüglich des Auslegerarms (l) verändern.

Zum Antrieb des Rührpropellers (3) ist am oberen, das Schwenklager (l9) überragenden Ende des Propellerrohrs (2) ein Kegelradgetriebe (24) angeordnet, dessen Abtriebswelle unmittelbar mit der Propellerwelle (2l) verbunden ist und dessen Antriebswelle (25) von dem Propellerrohr (2) zum Schlepper hin senkrecht absteht.

Im mittleren Längenbereich des Auslegerarms (l) ist an dessen Unterseite ein Doppelgelenk (26) angebaut. Es besteht aus einer Antriebswelle (27) und einer Abtriebswelle (28), die an den Holmen (8) drehbar gelagert und durch zwei spiegelbildlich angeordnete Kardangelenke mit einem Gelenkmittelstück (29) verbunden sind. Die von diesem Mittelstück abgewendeten Enden der Anschlußwellen (27, 28) sind zu der zwischen den Holmen (8) ausgespannten Ebene hin geneigt.

Die Antriebswelle (27) des Doppelgelenks ist mit der Zapfwelle (30) des Schleppers mittels einer unteren Gelenkwelle (3l) gekoppelt. Eine entsprechende gelenkige Antriebskopplung zwischen der Abtriebswelle (28) des Doppelgelenks und der Antriebswelle (25) des Kegelradgetriebes bewirkt eine obere Gelenkwelle (32). Es handelt sich dabei um die bei landwirtschaftlichen Maschinen üblichen Gelenkwellen, die je aus zwei symmetrischen Kardangelenken und einem teleskopierbaren Mittelstück bestehen. Infolge des beschriebenen sinnreichen konstruktiven Aufbaues sind spezielle sogenannte Weitwinkel-Gelenkwellen nicht erforderlich. Die untere Gelenkwelle (3l), die eine größere Länge hat als die obere, wird in dem gängigen Schwenkwinkelbereich des Auslegerarms (l) nur wenig abgewinkelt. Es ergeben sich daher hinsichtlich der Belastbarkeit kaum Probleme.

Kritischer ist in dieser Hinsicht die kürzere obere Gelenkwelle (32), weil es auf einen möglichst großen Schwenkwinkelbereich (33) des Propellerrohrs (2) aus betriebstechnischen Erwägungen entscheidend ankommt. Die Anordnung ist daher so getroffen, daß beim Überstreichen dieses Schwenkwinkelbereichs (33) die obere Gelenkwelle (32) sowohl eine Z-Anordnung als auch eine W-Anordnung durchläuft. Die mit voll ausgezogenen Strichen gezeichnete Stellung ist die sogenannte Z-Anordnung. Hierbei verlaufen die Abtriebswelle (28) des Doppelgelenks und die Antriebswelle (25) des Kegelradgetriebes parallel zueinander. In der strichpunktiert angedeuteten Stellung-des Propellerrohrs (2) bildet die Gelenkwelle (32) eine W-Anordnung. Die Abtriebswelle (28) und die Antriebswelle (25) bilden mit dem Mittelstück der Gelenkwelle gleich große Winkel.

**Patentansprüche**

1. Güllemixer zum Anbau an einen Ackerschlepper und zum Antrieb mittels Zapfwelle (30), bestehend aus einem Dreieckanschlußbock (11), der mit den Dreieckslenkern (13, 16) des Schleppers verbindbar ist, einem Auslegerarm (1), der um eine an der Basis des Dreieckanschlußbocks (11) horizontal verlaufende Achse schwenkbar gelagert ist, einem am oberen Ende des Auslegerarms (1) in einem Schwenklager (19) mit horizontaler Achse gelagerten Propellerarm, der im Betriebszustand nach unten geneigt ist und am unteren Ende einen Propeller (3) trägt, wobei zur Übertragung der Antriebsbewegung auf den Propeller (3) ein mit der Zapfwelle (30) kuppelbarer Gelenkwellenstrang vorgesehen ist, und zwei stufenlos längenveränderbaren Zugvorrichtungen, von denen die eine (17, 18) zur Neigungsverstellung des Auslegerarms (1) am oberen Ende (15) des Dreieckanschlußbocks (11) und die andere (23) zur Neigungsverstellung des Propellerarms an einem nach oben über das Schwenklager (19) hinausstehenden Fortsatz (22) des Propellerarms angelenkt ist, dadurch gekennzeichnet, daß der Propellerarm aus einem Propellerrohr (2) besteht, das eine Propellerwelle (21) enthält, die mit der Abtriebswelle eines Winkelgetriebes (24) fluchtet und an ihrem unteren Ende einen Propeller (3) trägt, und daß der Gelenkwellenstrang ein an der Unterseite des Auslegerarms (1) angebautes Doppelgelenk (26) umfaßt, dessen Antriebswelle (27) und Abtriebswelle (28) durch zwei spiegelbildlich angeordnete Kardangelenke mit einem Gelenkmittelstück (29) verbunden und an dem Auslegerarm (1) drehbar gelagert sind, wobei die von dem Gelenkmittelstück (29) abgewendeten Enden beider Wellen zur Ebene der Holme (8) hin geneigt sind, und daß die Antriebswelle (27) mit der Zapfwelle (30) und die Abtriebswelle (28) mit der Antriebswelle (25) des Winkelgetriebes (24) über teleskopierbare Gelenkwellen (31, 32) verbunden sind.

2. Güllemixer nach Anspruch 1, dadurch gekennzeichnet, daß der Auslegerarm (1) etwa auf halber Länge einen quer zu seiner Längserstreckung nach oben abstehenden biegesteifen Konsolarm (9) aufweist und daß beide Zugvorrichtungen (17, 18 und 23) an dessen Kopf (10) angreifen.

3. Güllemixer nach Anspruch 2, dadurch gekennzeichnet, daß die Zugvorrichtung zur Neigungsverstellung des Propellerarms ein hydraulischer Stellkolben (23) ist.

## Claims

1. Liquid manure mixer for attachment to a farm tractor and to be driven by means of a power take off shaft (30), consisting of a triangular connecting frame (11), which can be connected to the triangular guide rods (13, 16) of the tractor, of a cantilever arm (1), which is mounted to tilt about an axis extending horizontally on the base of the triangular connecting frame (11) of a propeller arm mounted at the upper end of the cantilever arm (1) in a swivel bearing (19) with a horizontal axis, which propeller arm is inclined downwards in the operating state and at the lower end supports a propeller (3), for transmitting the driving movement to the propeller (3) a length of articulated shafting able to be connected to the power take off shaft (30) is provided, and two traction devices whereof the length can be varied infinitely, whereof one (17, 18) for adjusting the inclination of the cantilever arm (1) is pivoted at the upper end (15) of the triangular connecting frame (11) and the other (23) for adjusting the inclination of the propeller arm is pivoted on an extension (22) of the propeller arm projecting upwards beyond the swivel bearing (19), characterised in that the propeller arm consists of a propeller tube (2), which contains a propeller shaft (21), which aligns with the output shaft of miter gearing (24) and at its lower end supports a propeller (3), and that the length of articulated shafting comprises a double joint (26) attached to the under side of the cantilever arm (1), whereof the drive shaft (27) and output shaft (28) are connected by two universal joints arranged as a mirror image with a joint centre portion (29) and are mounted to rotate on the cantilever arm (1), the ends of both shafts remote from the joint centre portion (29) being inclined towards the plane of the bars (8), and that the drive shaft (27) is connected to the power take off shaft (30) and the output shaft (28) is connected to the drive shaft (25) of the miter gearing (24) by way of telescopic articulated shafts (31, 32).

2. Liquid manure mixer according to Claim 1, characterised in that approximately half way along its length the cantilever arm (1) comprises a rigid bracket arm (9) projecting upwards transversely to its longitudinal extent and that both traction devices (17, 18 and 23) act upon its head (10).

3. Liquid manure mixer according to Claim 2, characterised in that the traction device for adjusting the inclination of the propeller arm is a hydraulic servo piston (23).

## Revendications

1. Mélangeur de lisier destiné à être monté sur un tracteur agricole et à être entraîné par une prise de force (30), comportant un chevalet de raccordement triangulaire (11), qui peut être relié aux guidons triangulaires (13,16) du tracteur, une flèche (1), qui est montée pivotante autour d'un axe s'étendant horizontalement à la base du chevalet (11), un bras à hélice monté à l'extrémité supérieure de la flèche (1) dans un palier pivotant (19) à axe horizontal, et qui, en service, est incliné vers le bas et porte, à son extrémité inférieure, une hélice (3), et, pour transmettre le mouvement d'entraînement à l'hélice (3), est prévue une ligne d'arbres articulée qui peut être couplée à la prise de force (30), et deux dispositifs de traction modifiables en longueur de façon continue, desquels l'un (17,18) est articulé à l'extrémité supérieure (15) du chevalet (11) pour régler l'inclinaison de la flèche (1), et l'autre (23) est articulé à un prolongement (22) du bras à hélice, faisant saillie vers le haut au-dessus du palier pivotant (19), pour régler l'inclinaison du bras à hélice, caractérisé en ce que le bras à hélice est constitué d'un tube (2) contenant un arbre d'hélice (21), qui est aligné avec l'arbre mené d'un engrenage conique (24) et porte, à son extrémité inférieure, une hélice (3), et en ce que la ligne d'arbres articulée comporte une double articulation (26) montée sur le dessous de la flèche (1), dont l'arbre d'entraînement (27) et l'arbre mené (28) sont reliés, par l'intermédiaire de deux joints à la Cardan agencés de façon inversée, à une pièce intermédiaire (29) et sont montés rotatifs sur la flèche (1), les extrémités, éloignées de la pièce intermédiaire (29), des deux arbres étant inclinées vers le plan des longerons (8), et en ce que l'arbre d'entraînement (27) est relié à la prise de force (30) et l'arbre mené (28) est relié à l'arbre d'entraînement (25) de l'engrenage conique (24), par l'intermédiaire d'arbres articulés télescopiques (31,32).

2.   Mélangeur de lisier selon la revendication 1, caractérisé en ce que la flèche (1) présente, à peu près à mi-longueur, une poutre (9) rigide à la flexion et faisant saillie vers le haut transversalement à son extension longitudinale, et en ce que les deux dispositifs de traction (17,18 et 23) s'engagent sur sa tête (10).

3.   Mélangeur de lisier selon la revendication 2, caractérisé en ce que le dispositif de traction pour régler l'inclinaison du bras à hélice est un vérin hydraulique (23).

FIG.1

FIG.2

FIG.3

EP 0 288 593 B1